# EUROPEAN PATENT APPLICATION

(11) **EP 2 381 738 A1**
(43) Date of publication of application: **26.10.2011**
(21) Application number: 10731068.2
(22) Date of filing: 18.01.2010
(51) Int. Cl.: H04W 88/00

(54) **ADAPTIVE VOLUME ADJUSTMENT METHOD, DEVICE AND COMMUNICATION TERMINAL**

(30) Priority: 19.01.2009 CN 200910005236
(71) Applicant: Huawei Device Co., Ltd., Shenzhen, Guangdong 518129 (CN)
(72) Inventor: YUE, Zhonghui, Shenzhen Guangdong 518129 (CN)
(74) Representative: Pfenning, Meinig & Partner GbR
(86) International application number: PCT/CN2010/070244
(87) International publication number: WO 2010/081434

(57) **Abstract**

The present invention relates to the field of communications technology, and more particularly, to a method, a device and a communication terminal for adjusting volume adaptively. The present invention discloses a method for adjusting volume adaptively, including: receiving an audio signal from a sound source; obtaining information about the sound source corresponding to the audio signal and input and output gain parameters corresponding to the information about the sound source; and adjusting input volume and output volume according to the input and output gain parameters. The present invention also discloses an adaptive volume adjusting device, comprising a receiving unit, an obtaining unit and an adjusting unit. In addition, the present invention discloses a communication terminal comprising the preceding device. The advantage of the present invention is to automatically adjust input volume and output volume so that the users can hear an ideal voice.

## Description

This application claims priority to Chinese Patent Application No. 200910005236.3, filed with the Chinese Patent Office on January 19, 2009 and entitled "METHOD, DEVICE AND COMMUNICATION TERMINAL FOR ADJUSTING VOLUME ADAPTIVELY", which is hereby incorporated by reference in its entirety.

### FIELD OF THE INVENTION

The present invention relates to the field of communications technology, and more particularly, to a method, a device and a communication terminal for adjusting volume adaptively.

### BACKGROUND OF THE INVENTION

In modem society, the video conferencing service becomes more and more popular in large conferences such as business conferences and forum sessions. A video conferencing system primarily includes a video terminal, a transmission network device, a multipoint control unit (MCU), and a service management platform. It implements simultaneous exchange of images, voices, and data between two or more sites. During the transmission of voices, the voice signals picked up by a local microphone are coded and then transmitted to a remote conference site through the transmission network. In addition, after receiving the digital signals from the remote conference site, the receiver decodes them to restore the voice signals, and then the local loudspeaker plays the voice signals. In prior conferencing terminals, however, the input and output gains for volume adjustment are generally constant. When a user in a remote conference site moves while speaking, the volume of the user's voice is unstable in the local conference site. As a result, local users cannot well hear the voice transmitted from the remote conference site. Moreover, because of the acoustic echo, the local users often hear the voice of the local speaker from the loudspeaker on a local video conferencing terminal. This degrades the user experience.

The prior art has at least the following disadvantages: The volume is manually adjusted on a video conferencing terminal, which fails to meet the special requirements of modem conferences. Particularly, the poor acoustic echo cancellation significantly degrades the quality of a video conference. Excellent echo cancellation depends on accurate prediction of echo reference signals. However, signals collected by the microphone on the video conferencing terminal include the voice of the speaker and the feed echo which is heavily affected by the input and output gains. Due to lack of accurate input and output gain parameters, it is difficult to predict the ratio of feed echo signals to echo reference signals using the echo cancellation algorithm. This results in a poor echo cancellation.

### SUMMARY OF THE INVENTION

Embodiments of the present invention provides a method, a device and a communication terminal for adjusting volume adaptively, so that the terminal can provide a clear voice for users without manual adjustment. Specifically:

The present invention provides a method for adjusting volume adaptively, including:
receiving an audio signal from a sound source;
obtaining information about the sound source corresponding to the voice signal;
obtaining input and output gain parameters corresponding to the information about the sound source; and
adjusting input volume and output volume according to the input and output gain parameters.

The present invention provides another method for adjusting volume adaptively, including:
receiving an audio signal from a sound source;
receiving an input gain parameter or output gain parameters that is inputted;
obtaining an output gain parameter corresponding to the input gain parameter or an input gain parameter corresponding to the output gain parameter; and
adjusting input volume and output volume according to the input and output gain parameters.

The present invention provides a device for adjusting volume adaptively, including:
a receiving unit, adapted to receive an audio signal from a sound source;
an obtaining unit, configured to obtain information about the sound source corresponding to the audio signal and input and output gain parameters corresponding to the information about the sound source; and
an adjusting unit, configured to adjust input volume and output volume according to the input and output gain parameters obtained by the obtaining unit.

The present invention provides a communication terminal, including an adaptive volume adjusting device, where the device further includes:
a receiving unit, configured to receive an audio signal from a sound source;
an obtaining unit, configured to obtain information about the sound source corresponding to the audio signal and input and output gain parameters corresponding to the information about the sound source; and
an adjusting unit, configured to adjust input volume and output volume according to the input and output gain parameters obtained by the obtaining unit.

In the embodiments of the present invention, appropriate input and output gain parameters are obtained according to the obtained information about the sound source, and the input volume and output volume are adjusted according to the input and output gain parameters, thereby providing excellent sound effect for users. Moreover, the audio echo is effectively cancelled according to the obtained input and output gain parameters, thereby providing a clear voice for the users.

### BRIEF DESCRIPTION OF THE DRAWINGS

FIG. 1 is a flow chart of a method for adjusting volume adaptively provided in Embodiment 1 of the present invention;

FIG. 2 is a flow chart of a method for adjusting volume adaptively provided in Embodiment 2 of the present invention;

FIG. 3 is a flow chart of a method for adjusting volume adaptively provided in Embodiment 3 of the present invention;

FIG. 4 is a flow chart of a method for adjusting volume adaptively provided in Embodiment 4 of the present invention;

FIG. 5 is a block diagram of a device for adjusting volume adaptively provided in Embodiment 5 of the present invention;

FIG. 6 is a schematic block diagram of an obtaining unit 20 in FIG. 5 provided in an embodiment of the present invention;

FIG. 7 is a schematic block diagram of an obtaining unit 20 in FIG. 5 provided in another embodiment of the present invention; and

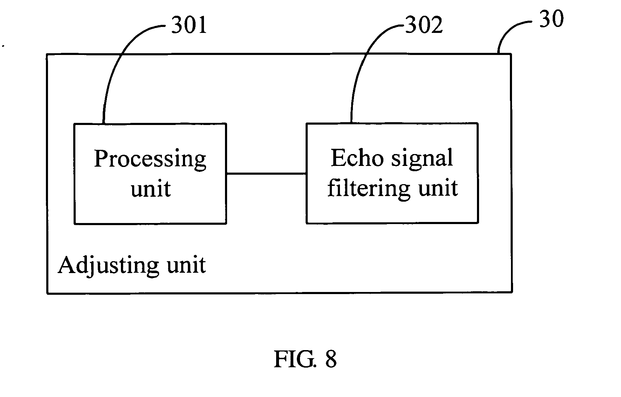

FIG. 8 is schematic block diagram of an adjusting unit 30 in FIG. 5 provided in an embodiment of the present invention.

### DETAILED DESCRIPTION OF THE EMBODIMENTS

The present invention is detailed below with reference to accompanying drawings.

In the embodiments of the present invention, an adaptive volume adjustment technology is added on a communication terminal for automatically adjusting input volume and output volume, so that users can receive an ideal voice.

### Embodiment 1

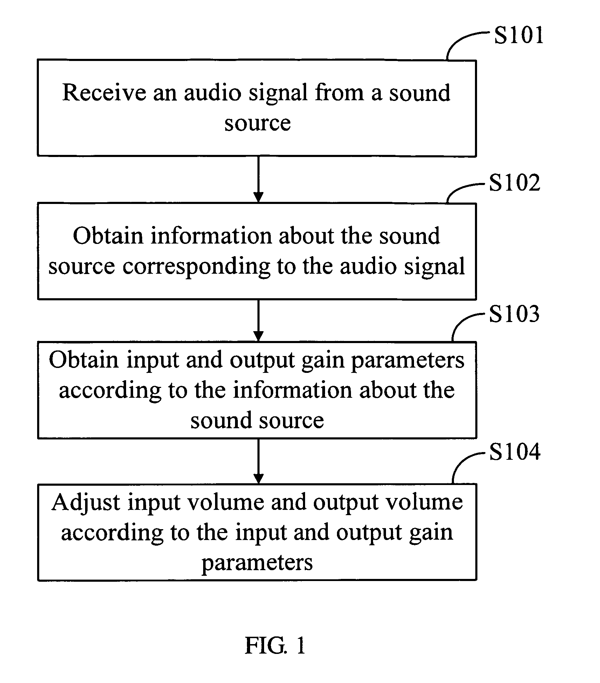

FIG. 1 is a flow chart of a method for adjusting volume adaptively provided in Embodiment 1 of the present invention. The flow chart includes the following steps:

S101: Receive an audio signal from a sound source.

During the implementation of S101, the sound source in this embodiment of the present invention is a source of the sound and is generally a speaker; the audio signal is a voice signal from the sound source, that is, the voice signal from the speaker.

S102: Obtain information about the sound source corresponding to the audio signal.

During the implementation of S102, the information about the sound source corresponding to the audio signal can be obtained in two ways: One way is to obtain the information about the sound source according to the audio signal, in which case the information about the sound source primarily refers to a volume value of the audio signal; the other way is to receive the predefined sound source information directly inputted by the user, in which case the information about the sound source primarily refers to the distance between the terminal of the audio signal and the sound source.

S103: Obtain input and output gain parameters corresponding to the information about the sound source.

During the implementation of S 103, the output and output gain parameters corresponding to the information about the sound source are obtained according to the information about the sound source that is obtained in one or both of the above two ways according to the audio signal.

S 104: Adjust input volume and output volume according to the input and output gain parameters.

During the implementation of S 104, the input volume and output volume are adjusted according to the input and output gain parameters obtained in S 103. For example, after the audio signal from the sound source is received, the input and output gain parameters are obtained according to the volume value of the audio signal, and then the input volume and output volume are adjusted according to the input and output gain parameters. Alternatively, after the audio signal from the sound source is received, the input and output gain parameters are not obtained according to the volume value of the audio signal; instead, the input and output gain parameters are obtained according to an appropriate distance between the terminal of the audio signal and the sound source inputted by the user, and then the input volume and the output volume are adjusted according to the input and output gain parameters. In this way, the user does not need to manually adjust the volume, and the communication terminal automatically adapts to the received volume, which brings great convenience.

It should be noted that, in this embodiment of the present invention, an appropriate method for obtaining the information about the sound source corresponding to the audio signal can be chosen according to the actual situation; that is, the best method can be chosen by taking into consideration factors such as the performance of the terminal and the conditions of the collecting and playing devices. In addition, in this embodiment of the present invention, the distance between the terminal of the audio signal and the sound source can be obtained according to the audio signal, and then the input and output gain parameters can be obtained according to the distance. The input and output gain parameters refer to the gain parameters of the terminal that is on the same side with the speaker. That is, the terminal that is located in the same scene with the speaker can adjust the input gain of the voice collected by the microphone and then transmit the voice to the peer communicating party; the terminal can also adjust the output gain of the voice received from the peer communicating party and then play the voice with a loudspeaker. In this way, if the method provided in this embodiment is implemented in the scene of either of the communicating parties, the communicating parties can receive a clear voice; if the method is implemented in the scenes of both of the communicating parties, the communicating parties can receive the best voice.

### Embodiment 2

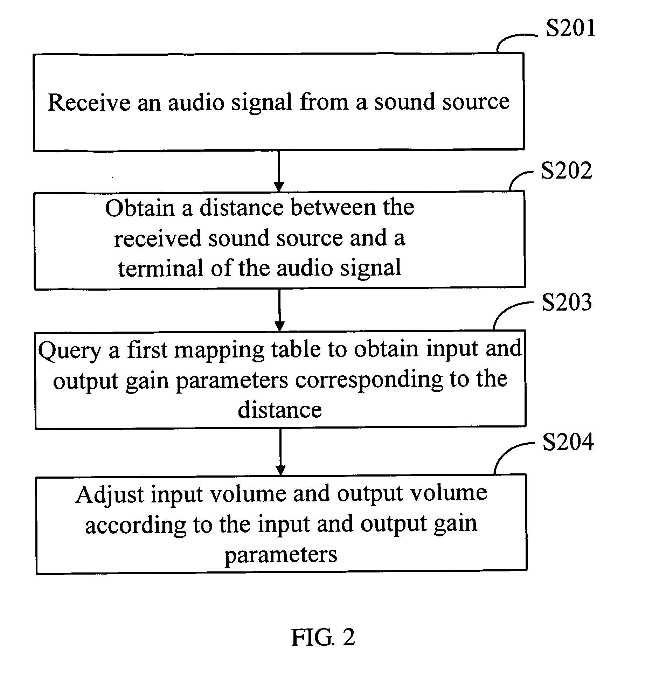

FIG. 2 is a flow chart of a method for adjusting volume adaptively provided in Embodiment 2 of the present invention. The flow chart includes the following steps:

S201: Receive an audio signal from a sound source.

S202: Obtain a distance between the sound source and a terminal receiving the audio signal.

S203: Query a first mapping table to obtain input and output gain parameters corresponding to the distance.

S204: Adjust input volume and output volume according to the input and output gain parameters.

In this embodiment of the present invention, the distance between the sound source and the terminal receiving the audio signal refers to the inputted distance between the speaker and the terminal, because the distance between the speaker and the terminal directly affect the effect of the speaker's audio signal obtained by the terminal and the effect of the sound played by a remote loudspeaker. For example, a large distance indicates that the speaker is far away from the terminal. In this case, the volume of the voice collected by the local terminal is low. Therefore, the input gain of the local terminal needs to be increased to ensure the effect of the sound received by a remote user. After that, even if the output gain of the remote terminal remains unchanged, the remote user can hear a clear voice from the local terminal. Alternatively, audio output gain of the remote terminal can be increased so that the remote user can hear a clear voice from the local terminal. It should be understood that the output volume can be adjusted by increasing the local audio input gain and the remote audio output gain. The distance can be judged by the user. Therefore, after receiving the distance inputted by the user, the terminal should obtain the input and output gain parameters from the first mapping table. The first mapping table contains the ideal input and output gain parameters measured based on the volume of ordinary people and the distance between a speaker and a terminal. That is, each distance in the table maps a group of input and output gain parameters. After the audio signals received and the voice signals played are adjusted according to the input and output gain parameters, the terminal can receive ideal input volume and output volume. For example, if the speaker is about two meters away from the terminal, after receiving the inputted distance (two meters), the terminal queries the first mapping table, and obtains the input and output gain parameters, respectively +3 dB and +6 dB. Then, the terminal increases the input volume by 3 dB and the output volume by 6 dB according to the input and output gain parameters.

It can be understood that a location detection device can be added on the terminal to automatically detect the distance between the local terminal and the sound source, and the mapping(s) between the local input gain parameter and/or the local output gain parameter can be set in the terminal; the distance between the sound source and the terminal can be detected, and then the first mapping table can be queried to obtain the corresponding local input gain parameter and the remote output gain parameter.

It should be understood that the distance between the sound source and the terminal can be obtained in other ways such as image processing. For example, the distance between the sound source and the terminal can be obtained through a depth camera disposed on the terminal and then be automatically transmitted to the terminal; the terminal can obtain the input gain parameter of the local terminal and/or the output gain parameter of the remote terminal from the first mapping table according to the distance, and then the volume of the local terminal and/or the volume of the remote terminal can be adjusted accordingly.
The advantages of this embodiment of the present invention are as follows: The input and output gain parameters can be obtained without complicated calculation, and the input volume and output volume can be adjusted effectively accordingly. Therefore, the method will easily become popular on terminals with limited technologies.

It should be noted again that the first mapping table includes the ideal input and output gain parameters measured based on the volume of ordinary people and the distance between a speaker and a terminal; the input volume and output volume are also related to the performance of related devices. Therefore, the input and output gain parameters should be measured according to the performance of different devices, so that ideal input volume and output volume can be obtained. The input and output gain parameters refer to the gain parameters of the terminal that is on the same side with the speaker. That is, the terminal that is located in the same scene with the speaker can adjust the input gain of the voice collected by the microphone and then transmit the voice to the peer communicating party; the terminal can also adjust the output gain of the voice received from the peer communicating party and then play the voice with a loudspeaker. In this way, if the method provided in this embodiment is implemented in the scene of either of the communicating parties, the communicating parties can receive a clear voice; if the method is implemented in the scenes of both of the communicating parties, the communicating parties can receive the best voice.

### Embodiment 3

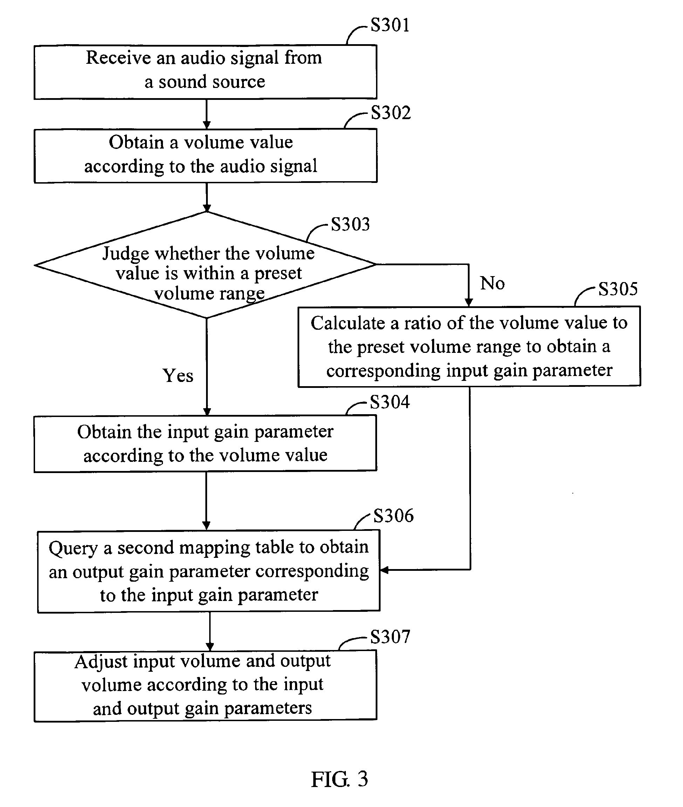

FIG. 3 is a flow chart of a method for adjusting volume adaptively provided in Embodiment 3 of the present invention. The flow chart comprises the following steps:

S301: Receive an audio signal from a sound source.

S302: Obtain a volume value according to the audio signal.

S303: Judge whether the volume value is within a preset range. If the volume value is within the preset range, proceed to S304; if the volume value is not within the preset range, proceed to S305.

S304: Obtain an input gain parameter according to the volume value;

S305: Calculate a difference between the volume value and the preset volume range to obtain the input gain parameter;

S306: Query a second mapping table to obtain an output gain parameter corresponding to the input gain parameter.

S307: Adjust input volume and output volume according to the input and output gain parameters.

In this embodiment of the present invention, the volume value is obtained according to the audio signal received from the sound source, and then whether the volume value is within the preset range is judged. The preset volume range refers to the preset ideal volume range. If the received volume value is within the range, it is deemed that there is an ideal distance between the speaker and the terminal. Therefore, the input gain parameter corresponding to the volume value is appropriate, and the input volume does not need to be adjusted. If the received volume value is not within the range, it is deemed that the distance between the speaker and the terminal is not ideal. Therefore, the input gain parameter corresponding to the volume value is inappropriate, and the input volume needs to be adjusted. In this case, the difference between the volume value and the preset volume range is calculated to obtain the corresponding input gain parameter so that the input volume is adjusted accordingly. Based on the unadjusted or adjusted input gain parameter, the second mapping table is queried to obtain the output gain parameter corresponding to the input gain parameter; then, the output volume is adjusted according to the output gain parameter. For example, if the volume value of the received audio signal is 60 dB and the preset value range is 70 dB to 75 dB, the 60 dB signal maps the third-level volume (60 dB to 65 dB). Therefore, the difference between the volume value and the preset volume range is +10 dB, that is, the input gain parameter value is +10 dB. After the second mapping table is queried, it is found that the output gain parameter corresponding to the input gain parameter value +10 dB is +15 dB. Therefore, the volume value of the input audio signal is increased by 10 dB, and the played volume value of the loudspeaker is increased by 15 dB.

In this embodiment of the present invention, the volume value can also be used to analyze the spatial information of the speaker to obtain the azimuth of the speaker. Then, the camera on the terminal can be controlled based on the azimuth to align the camera to the speaker. After that, the distance between the speaker and the terminal can be obtained based on the focal point of the camera. Finally, the input volume and output volume can be adjusted based on the distance by using the method provided in Embodiment 2.

Compared with the method provided in Embodiment 2, the method provided in the embodiment has the following advantages: No parameters need to be inputted by the user, and the whole process is automatically implemented by the terminal; accurate input and output gain parameters can be obtained through the judgment, calculation, and comparison processes. To sum up, this method simplifies the user operations and adjusts input volume and output volume accurately.

It should be noted that the second mapping table in this embodiment is used for querying an output gain parameter based on an input gain parameter, and the output gain parameter in the table is an ideal output gain parameter that maps an input gain parameter. In addition, the input and output gain parameters are the gain parameters of the terminal that is on the same side with the speaker. That is, the terminal that is located in the same scene with the speaker can adjust the input gain of the voice collected by the microphone and then transmit the voice to the peer communicating party; the terminal can also adjust the output gain of the voice received from the peer communicating party and then play the voice with a loudspeaker. In this way, if the method provided in this embodiment is implemented in the scene of either of the communicating parties, the communicating parties can receive a clear voice; if the method is implemented in the scenes of both of the communicating parties, the communicating parties can receive the best voice.

### Embodiment 4

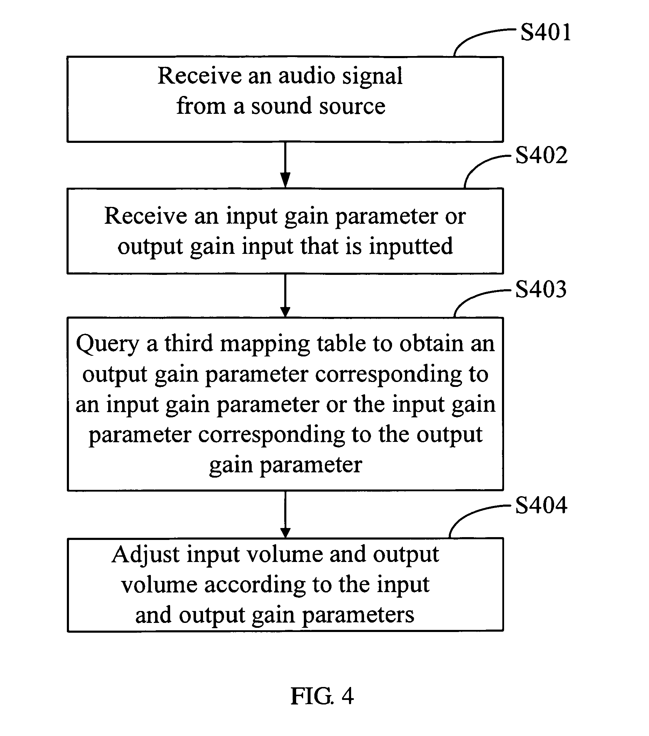

FIG. 4 is a flow chart of a method for adjusting volume adaptively provided in Embodiment 4 of the present invention. The flow chart comprises the following steps:

S401: Receive an audio signal from a sound source.

S402: Receive an inputted input gain parameter or output gain parameter.

S403: Query a third mapping table to obtain an output gain parameter corresponding to the input gain parameter or an input gain parameter corresponding to the output gain parameter.

S404: Adjust input volume and output volume according to the input and output gain parameters.

In this embodiment of the present invention, after the user adjusts the input gain parameter or the output gain parameter, the terminal queries the third mapping table to obtain the output gain parameter corresponding to the input gain parameter or the input gain parameter corresponding to the output gain parameter. Then, the input volume and output volume can be adjusted according to the input and output gain parameters. The third mapping table includes the ideal input gain parameter and output gain parameter measured respectively based on the inputted output gain parameter and input gain parameter.

Compared with the methods provided in the preceding embodiments, the method provided in this embodiment has the following advantages: After the user directly inputs an input gain parameter or an output gain parameter, the terminal can automatically match the corresponding output gain parameter or input gain parameter, and then the input volume and output volume can be adjusted accordingly; in particular, after the user adjusts the output gain parameter, the user can receive an ideal voice, and the input gain parameter is automatically adjusted to provide ideal input volume. In a word, this method is very simple and practical.

It should be noted that the method provided in this embodiment can also be implemented in combination with Embodiment 1, Embodiment 2, or Embodiment 3. That is, the terminal receiving the audio signal from the sound source can implement the method provided in this embodiment and the method provided Embodiment 1, Embodiment 2, or Embodiment 3. Therefore, the user can choose an appropriate adaptive volume adjustment method based on the actual situation to produce better effect. In addition, the input and output gain parameters refer to the gain parameters of the terminal that is on the same side with the speaker. That is, the terminal that is located in the same scene with the speaker can adjust the input gain of the voice collected by the microphone and then transmit the voice to the peer communicating party; the terminal can also adjust the output gain of the voice received from the peer communicating party and then play the voice with a loudspeaker. Therefore, if the method provided in this embodiment is implemented in both of the scenes of the communicating parties, the communicating parties can receive the best voice.

To obtain input volume and output volume, echo cancellation must be implemented for the received audio signal. Therefore, in the preceding embodiments, after the input and output gain parameters are obtained, echo cancellation can be implemented. The echo cancellation includes the following steps:
performing calculation or querying a table according to the input and output gain parameters to obtain an echo processing parameter; and
filtering an echo signal out of the audio signal according to the echo processing parameter.

If a calculation method is adopted to obtain the echo processing parameter, the calculation can be performed based on the relationship between the input and output gain parameters and the echo processing parameter in the prior art; if a table is queried to obtain the echo processing parameter, the appropriate echo processing parameter can be obtained by querying the pre-stored table including the mappings between the input and output gain parameters and the echo processing parameter. Of course, the echo processing parameter can be directly queried in the preceding embodiments. For example, in Embodiment 2, the first mapping table can be queried according to the obtained distance to directly obtain the input and output gain parameters and the echo processing parameter corresponding to the distance; in Embodiment 3, the second mapping table can be queried according to the obtained input gain parameter to directly obtain the output gain parameters and the echo processing parameter corresponding to the input gain parameter; in Embodiment 4, the third mapping table is queried according to the received input gain parameter or output gain parameter to directly obtain the output gain parameter or input gain parameter and the echo processing parameter corresponding to the input gain parameter or output gain parameter.

After the echo processing parameter is obtained, echo signals can be filtered out of the audio signals in a manner like echo cancellation algorithm. The filtering of audio signal effectively removes the echo signals out of the audio signals and significantly improves the quality of the audio signals. As a result, ideal input volume and output volume are obtained.

### Embodiment 5

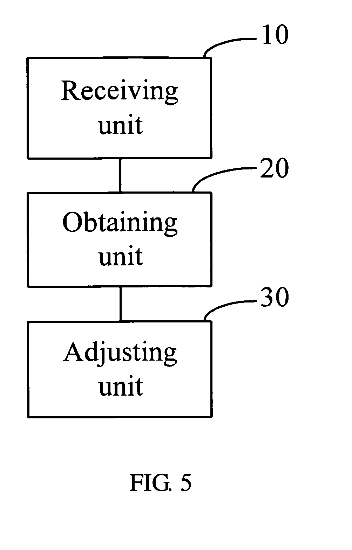

To better implement the preceding methods, this embodiment of the present invention provides an adaptive volume adjusting device. FIG. 5 is a block diagram of the adaptive volume adjusting device provided in this embodiment. As shown in FIG. 5, the adaptive volume adjusting device includes:
a receiving unit 10, configured to receive an audio signal from a sound source;
an obtaining unit 20, configured to obtain information about the sound source corresponding to the audio signal and input and output gain parameters corresponding to the information about the sound source; and
an adjusting unit 30, configured to adjust input volume and output volume according to the input and output gain parameters obtained by the obtaining unit 20.

The device provided in this embodiment of the present invention obtains the information about the sound source corresponding to the audio signal received by the receiving unit 10 according to the audio signal, obtains the input and output gain parameters corresponding to the sound source information, and then adjusts the input volume and output volume through the adjusting unit 30 according to the parameters obtained by the obtaining unit 20. In this way, the device adaptively adjusts the input volume and output volume according to the received audio signal. As a result, users who communicate through this device can receive an ideal voice without manually adjusting the input volume or output volume.

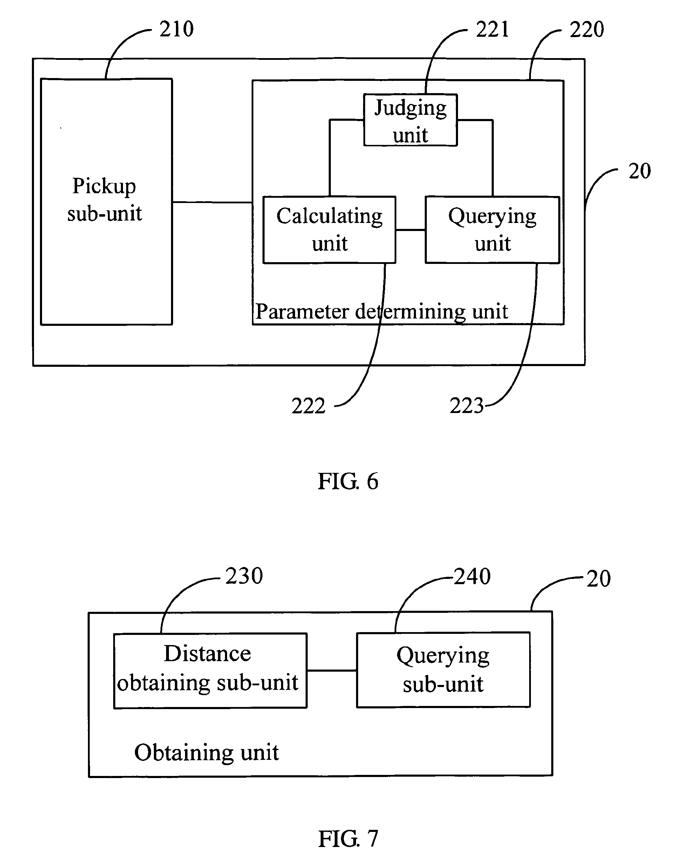

FIG. 6 is a schematic block diagram of an embodiment of the obtaining unit 20 in FIG.. 5. As shown in FIG. 6, the obtaining unit 20 includes:
a pickup sub-unit 210, configured to pick up a volume value corresponding to the audio signal; and
a parameter determining unit 220, configured to determine the input and output gain parameters corresponding to the volume value;

As shown in FIG. 6, the parameter determining unit further includes:
a judging unit 221, configured to judge whether the volume value is within the preset volume range and generate a judgment result;
a calculating unit 222, configured to: when the volume value is not within the preset volume range, calculate a ratio of the volume value to the preset volume to obtain the input gain parameter;
a querying unit 223, configured to: if the volume value is within the preset volume range, query in the second mapping table the output gain parameter corresponding to the input gain parameter in the judgment result of the judging unit or a calculation result of the calculation unit according to the judgment result of the judging unit or according to the calculation result of the calculation unit 222. In addition, the second mapping table is used to query the output gain parameter according to the input gain parameter and is stored in the querying unit 223; the output gain parameters in the table are ideal output gain parameters corresponding to the input gain parameters.

FIG. 7 is a schematic block diagram of another embodiment of the obtaining unit 20 in FIG. 5. As shown in FIG. 7, the obtaining unit 20 includes:
a distance obtaining sub-unit 230, configured to obtain the distance corresponding to the information about the sound source that corresponds to the audio signal, where the distance is automatically obtained according to the volume value of the sound source;
a querying sub-unit 240, configured to obtain in the first mapping table the input and output gain parameters corresponding to the distance, where the information about the sound source corresponding to the audio signal is the volume value of the audio signal. Based on the prior art, the volume value can also be used to analyze the spatial information of the speaker to obtain the azimuth of the speaker; the camera on the terminal can be controlled based on the azimuth to make the camera aim at the speaker, and the distance between the speaker and the terminal can be obtained based on the focal point of the camera. In this way, the distance included in the distance information, namely the distance corresponding to the volume value, is obtained. The first mapping table includes ideal input volume and output volume measured based on the volume of ordinary people and the distance between a speaker and a terminal; the input volume and output volume are also related to the performance of related devices. Therefore, the first mapping table stored in the querying sub-unit 240 needs to be obtained based on the relationship between the distances of different devices and the output and input gains.

The distance obtaining sub-unit 230 is configured to obtain the distance carried in the sound source information corresponding to the audio signal or the distance manually inputted by the user.

The querying sub-unit 240 is configured to obtain in the first mapping table the input and output gain parameters corresponding to the manually inputted distance.

If the distance is manually inputted by the user, this solution can be applied in Embodiment 2. After obtaining the distance inputted by the user, the distance obtaining sub-unit 230 instructs the querying sub-unit 240 to query the input and output gain parameters in the first mapping table. It should be noted that the first mapping table can be preset. The first mapping table includes the ideal input and output gain parameters measured based on the distance between a speaker and a terminal; the input volume and output volume are also related to the performance of related devices. Therefore, the first mapping table stored in the querying sub-unit 240 needs to be obtained based on the relationship between the distances of different devices and the output and input gains.

In this embodiment of the present invention, the receiving unit 10 may also be configured to receive the input gain parameter or the output gain parameter; the obtaining unit 20 may also be configured to obtain the output gain parameter or input gain parameter respectively according to the input gain parameter or output gain parameter received by the receiving unit 10, so that the adjusting unit 30 can adjust the input volume and output volume according to the input and output gain parameters obtained by the obtaining unit 20. The step of obtaining, by the obtaining unit 20, the corresponding output gain parameter or input gain parameter respectively according to the input gain parameter or output gain parameter received by the receiving unit 10 is: The obtaining unit 20 obtains in the third mapping table the output gain parameter corresponding to the input gain parameter, or obtains in the third mapping table the input gain parameter corresponding to the output gain parameter. The third mapping table includes the ideal input gain parameter and output gain parameter measured respectively based on the inputted output gain parameter and input gain parameter. In this way, the method provided in the fourth embodiment of the present invention can be implemented in combination with Embodiment 1, Embodiment 2, or Embodiment 3 in an adaptive volume adjusting device. That is, the functions of Embodiment 4 can be added on the device where Embodiment 1, Embodiment 2, or Embodiment 3 can be implemented. For example, if the volume needs to be adjusted according to the input gain parameter or the output gain parameter, the steps of Embodiment 4 can be started by adjusting an external button to input the input gain parameter or the output gain parameter.

FIG. 9 is a schematic block diagram of an embodiment of the adjusting unit 30 in FIG. 5. The adjusting unit 30 is configured to adjust the input volume and output volume according to the input and output gain parameters obtained by the obtaining unit. However, to ensure a high-quality voice, the adjusting unit 30 may also filter the echo signal out of the input and output voices, so as to provide high-quality input and output voices. The adjusting unit 30 further includes:
a processing unit 301, configured to perform calculation or query a table according to the input and output gain parameters to obtain the echo processing parameter; and
an echo signal filtering unit 302, configured to filter the echo signal out of the audio signal according to the echo processing parameter. The input and output gain parameters obtained by the obtaining unit 20 can be processed to obtain the echo processing parameter for filtering the echo signal out of the audio signal. This further cancels the echo signal in the audio signal and effectively restores the quality of the audio signal that is inputted and outputted. As a result, the played voice becomes clearer. In a word, the problems in the prior art are overcome.

It should be noted that the input and output gain parameters in this embodiment refer to the gain parameters of the terminal that is on the same side with the speaker. That is, the terminal that is located in the same scene with the speaker can adjust the input gain of the voice collected by the microphone and then transmit the voice to the peer communicating party; the terminal can also adjust the output gain of the voice received from the peer communicating party and then play the voice with a loudspeaker. Therefore, if the method is implemented in the scenes of both of the communicating parties, the communicating parties can receive the best voice.

In view of the foregoing, the obtaining unit in the adaptive volume adjusting device provided in this embodiment of the present invention can obtain the information and input and output gain parameters corresponding to the audio signal and input and output gain parameters according to the audio signal and the input gain parameter or output gain parameter received by the receiving unit, and then adjust the input volume and output volume accordingly. Therefore, the adaptive volume adjusting device provided in this embodiment of the present invention can adapt to various scenarios, and adopts an appropriate solution according to the specific scenario. For example, for a small conference with a small space and a relatively high population density, the device can directly obtain the inputted distance and then adjust the input volume and output volume; for an SOHO or a house with a fixed location and a few speakers, the device can obtain the inputted input gain parameter or output gain parameter and then automatically adjust the input volume and output volume; for a large conference with a large space and changing speakers, the device can obtain the volume value. The device can further cancel the echo signal in the audio signal and thus significantly improve the quality of the audio signal. As a result, the played voice becomes clearer.

### Embodiment 6

A communication terminal is also provided in an embodiment of the present invention. The communication device includes:
an adaptive volume adjusting device, further including:
   a receiving unit, configured to receive an audio signal from a sound source;
   an obtaining unit, configured to obtain information about the sound source corresponding to the audio signal and input and output gain parameters corresponding to the information about the sound source; and
   an adjusting unit, configured to adjust input volume and output volume according to the input and output gain parameters obtained by the obtaining unit. The receiving unit may also be configured to receive the input gain parameter or the output gain parameter; the obtaining unit may also be configured to obtain the corresponding output gain parameter or input gain parameter respectively according to the input gain parameter or the output gain parameter received by the receiving unit. The adjusting unit further includes:
      a processing unit, configured to perform calculation or query a table according to the input and output gain parameters to obtain an echo processing parameter; and an echo signal filtering unit, configured to filter an echo signal out of the audio signal according to the echo processing parameter.

The obtaining unit includes:
a first obtaining unit, configured to obtain a volume value of the audio signal;
a second obtaining unit, configured to obtain input and output gain parameters within a preset volume range corresponding to the obtained volume value; or
a third obtaining unit, configured to obtain a distance corresponding to the information about the sound source that corresponds to the audio signal;
a fourth obtaining unit, configured to obtain in the first mapping table the input and output gain parameters corresponding to the distance; or
a fifth obtaining table, configured to obtain the distance carried in the information about the sound source corresponding to the audio signal; and
a sixth obtaining unit, configured to obtain in the first mapping table the input and output gain parameters corresponding to the distance.

It should be noted that the input and output gain parameters in this embodiment are the gain parameters of the terminal that is on the same side with the speaker. That is, the terminal that is located in the same scene with the speaker can adjust the input gain of the voice collected by the microphone and then transmit the voice to the peer communicating party; the terminal can also adjust the output gain of the voice received from the peer communicating party and then play the voice with a loudspeaker. If the two communicating parties communicate with each other through the terminal provided in this embodiment, they can receive the best voice.

In view of the foregoing, the communication terminal provided in this embodiment of the present invention can adaptively adjust the input volume and output volume according to the received signals or parameters. As a result, users who communicate through this device can receive an ideal voice without manually adjusting the input volume or output volume. In addition, the device can further cancel the echo signal in the audio signal and significantly improve the quality of the audio signal. As a result, the played voice becomes clearer.

It should be understood by those skilled in the art that all or some steps of the method provided in the embodiment can be implemented by a program instructing relevant hardware; the program can be stored in a readable storage media like a read-only memory (ROM)/random access memory (RAM), a disk, or an optical disk.

Certainly, although the foregoing describes preferred embodiments of the invention, it should be noted that those skilled in the art can other variations and modifications without departing from the spirit or scope of the present invention, and the variations and modifications should fall within the protection scope of the present invention.

## Claims

1. A method for adjusting volume adaptively, comprising:
receiving an audio signal from a sound source;
obtaining information about the sound source corresponding to the audio signal;
obtaining input and output gain parameters corresponding to the information about the sound source; and
adjusting input volume and output volume according to the input and output gain parameters.

2. The method for adjusting volume adaptively according to claim 1, wherein: if the information about the sound source contains a distance between a terminal of the audio signal and the sound source, the step of obtaining the input and output gain parameters corresponding to the information about the sound source comprises:
querying a first mapping table to obtain the input and output gain parameters corresponding to the distance.

3. The method for adjusting volume adaptively according to claim 1, wherein: if the sound source information contains a volume value of the audio signal, the obtaining the input and output gain parameters corresponding to the information about the sound source comprises:
judging whether the volume value is within a preset volume range;
obtaining the input gain parameter according to the volume value if the volume value is within the preset volume range;
calculating a difference between the volume value and the preset volume range to obtain the input gain parameter if the volume value is not within the preset volume range; and
querying a second mapping table to obtain the output gain parameter corresponding to the input gain parameter.

4. The method for adjusting volume adaptively according to any one of claims 1 to 3, after the obtaining the input and output gain parameters corresponding to the information about the sound source, further comprising:
performing calculation or querying a table according to the input and output gain parameters to obtain an echo processing parameter; and
filtering an echo signal out of the audio signal according to the echo processing parameter.

5. A method for adjusting volume adaptively, comprising:
receiving an inputted input gain parameter or output gain parameter;
obtaining an output gain parameter corresponding to the input gain parameter or an input gain parameter corresponding to the output gain parameter; and
adjusting the input volume and output volume according to the input and output gain parameters.

6. The method for adjusting volume adaptively according to claim 5, wherein: the obtaining the input gain parameter corresponding to the input gain parameter or the input gain parameter corresponding to the output gain parameter comprises:
querying a third mapping table to obtain the output gain parameter corresponding to the input gain parameter or the input gain parameter corresponding to the output gain parameter.

7. The method for adjusting volume adaptively according to claim 5, after the obtaining the output gain parameter corresponding to the input gain parameter or the input gain parameter corresponding to the output gain parameter, further comprising:
performing calculation or querying a table according to the input and output gain parameters to obtain an echo processing parameter; and
filtering an echo signal out of the audio signal according to the echo processing parameter.

8. An adaptive volume adjusting device, comprising:
a receiving unit, configured to receive an audio signal from a sound source;
an obtaining unit, configured to obtain information about the sound source corresponding to the audio signal and input and output gain parameters corresponding to the information about the sound source; and
an adjusting unit, configured to adjust input volume and output volume according to the input and output gain parameters obtained by the obtaining unit.

9. The adaptive volume adjusting device according to claim 8, wherein the obtaining unit further comprises:
a pickup sub-unit, configured to pick up a volume value corresponding to the audio signal; and
a parameter determining unit, configured to determine the input and output gain parameters corresponding to the volume value.

10. The adaptive volume adjusting device according to claim 9, wherein the parameter determining unit comprises:
a judging unit, configured to judge whether the volume value is within a preset volume range and generate a judgment result, and transmit the judgment result to a querying unit if the volume value is within the preset volume range or to a calculating unit if the volume value is not within the preset volume range;
the calculating unit, configured to calculate a ratio of the volume value to the preset volume to obtain the input gain parameter; and
the querying unit, configured to query in the second mapping table the output gain parameter corresponding to the input gain parameter in the judgment result of the judging unit or in a calculation result of the calculation unit according to the judgment result of the judging unit or the calculation result of the calculation unit.

11. The adaptive volume adjusting device according to claim 8, wherein the obtaining unit comprises:
a distance obtaining sub-unit, configured to obtain a distance corresponding to the information about the sound source that corresponds to the audio signal; and
a querying sub-unit, configured to obtain in the first mapping table the input and output gain parameters corresponding to the distance.

12. The adaptive volume adjusting device according to claim 8, wherein:
the receiving unit is further configured to receive the input gain parameter or the output gain parameter; and
the obtaining unit is further configured to obtain the output gain parameter or the input gain parameter respectively according to the input gain parameter or the output gain parameter received by the receiving unit.

13. The adaptive volume adjusting device according to claim 12, wherein obtaining the output gain parameter or the input gain parameter respectively according to the input gain parameter or the output gain parameter received by the receiving unit comprises:
obtaining in the third mapping table the output gain parameter corresponding to the input gain parameter or the input gain parameter corresponding to the output gain parameter.

14. The adaptive volume adjusting device according to any one of claims 8 to 13, wherein the adjusting unit further comprises:
a processing unit, configured to perform calculation or query a table according to the input and output gain parameters to obtain an echo processing parameter; and
an echo signal filtering unit, configured to filter an echo signal out of the audio signal according to the echo processing parameter.

15. A communication terminal, comprising:
an adaptive volume adjusting device, further comprising:
a receiving unit, configured to receive an audio signal from a sound source;
an obtaining unit, configured to obtain information about the sound source corresponding to the audio signal and input and output gain parameters corresponding to the information about the sound source; and
an adjusting unit, configured to adjust input volume and output volume according to the input and output gain parameters obtained by the obtaining unit.

16. The communication terminal according to claim 15, wherein:
the receiving unit is further configured to receive the input gain parameter or the output gain parameter; and
the obtaining unit is further configured to obtain the output gain parameter or the input gain parameter respectively according to the input gain parameter or the output gain parameter received by the receiving unit.

17. The communication terminal according to claim 15 or 16, wherein the adjusting unit further comprises:
a processing unit, configured to perform calculation or query a table according to the input and output gain parameters to obtain an echo processing parameter; and
an echo signal filtering unit, configured to filter an echo signal out of the audio signal according to the echo processing parameter.
